# EUROPEAN PATENT SPECIFICATION

(11) **EP 0 421 525 B1**
(45) Date of publication and mention of the grant of the patent: **30.08.1995**
(21) Application number: 90202580.8
(22) Date of filing: 28.09.1990
(51) Int. Cl.: C08F 210/16, C08F 4/654

(54) **Process for the preparation of ethylene-propylene copolymers**
Verfahren zur Herstellung von Ethylen-Propylencopolymere
Procédé de préparation de copolymères éthylène-propylène

(30) Priority: 06.10.1989 IT 2193589
(43) Date of publication of application: 10.04.1991
(73) Proprietor: ENICHEM S.p.A., 20124 Milano (IT)
(72) Inventor: Mirra, Mauro, I-13051 Biella (Vercelli) (IT); Masi, Francesco, I-20097 San Donato Milanese (Milan) (IT); Invernizzi, Renzo, I-20147 Milan (IT); Langianni, Elio, I-44100 Ferrara (IT); Masini, Sergio, I-97100 Ragusa (IT)
(74) Representative: Fusina, Gerolamo

(56) References cited:
- EP-A- 0 144 716
- EP-A- 0 243 327

## Description

The present invention relates to a process for the production of ethylene-propylene copolymers having low to very low density values, for use in various application sectors.

Ziegler catalysts are widely known in technology and used on an industrial scale for the polymerization of ethylene and α-olefins in processes carried out at a low temperature and at a low pressure. The use of these catalysts is also known in technology for the polymerization or copolymerization of ethylene in processes carried out at a high temperature (in general above 120°C) and at high pressures (in general above about 500 bar), in reactors of the vessel or tubular type, under conditions similar to those used for the preparation of low-density polyethylene by means of radical initiators. For details of this technique reference should be made to the descriptions in British patent 828,828, US Patent 3,723,403 and French patent application 8320009. A special catalyst active in the copolymerization of ethylene with an α-olefin, containing four or more carbon atoms, in a tubular reactor operating at a high pressure and at a high temperature, has been described in European patent application NO. 243,327. According to this patent application, in particular, ethylene and butene-1 copolymers are obtained, having a butene-1 content from about 4 to about 8 wt% and density values from 0.915 to 0.940 g/ml.

It has now been found that the catalyst described in the European patent application referred to above is capable of copolymerizing ethylene and propylene, yielding copolymers with an unusually high propylene content, having low to very low density values, which are useful in various industrial applications.

The present invention accordingly relates to a process for the preparation of 1-butene free ethylene-propylene copolymers having a density from 0.880 to 0.915 g/ml and a content of propylene from 10 to 30% by weight, by copolymerization of the ethylene and propylene at a pressure of from 800 to 2000 bar, in a reactor vessel at a temperature of from 90 to 280°C, or in a tubular reactor at a temperature or torn 140 to 280°C, in the presence of Ziegler catalyst consisting of:
(a) an aluminium trialkyl cocatalyst, and
(b) a solid titanium catalyst component supported on magnesium chloride, the said component being formed of spherical particles at least 70% of which have a diameter from 0.5 to 10 » m, an apparent density from 0.3 to 0.5 g/ml, a porosity from 0.6 to 1.2 ml/g, a surface area from 20 to 120 m²/g, a hydroxy alcohol content below 2 wt% expressed as weight of ethanol, and a titanium content from 0.4 to 4.0 wt%, expressed as metallic titanium, the said titanium being present partially in the trivalent and partially in the tetravalent state, with a ratio between the said titanium in the trivalent state and the total titanium from 0.2/l to 0.5/l, the atomic ratio between the aluminum in the cocatalyst (a) and the titanium in solid component (b) ranging from 15/1 to 70/1;
   characterized in that:
   said reactor vessel or tubular reactor is supplied with a gas mixture containing ethylene and propylene in a weight ratio between 15:85 and 75:25, and possibly hydrogen in a quantity from 0 to 2000 parts by volume per million parts by volume of the gas mixture.

In the preferred embodiment, the catalyst component (b) contains from 2 to 3 wt% titanium and less than 1 wt% hydroxy alcohol, again expressed as weight of ethanol.

The solid component of the catalyst may be prepared by means of a process, already known, which provides for the preparation of a magnesium chloride spherical granular support containing ethanol hydroxy, the activation of the support by interaction with titanium tetrachloride to produce the activated support and the treatment of the activated support with aluminium alkyl chloride to produce the solid component of the catalyst.

More particularly, the support is prepared by the spray drying of an ethanolic magnesium chloride solution in a spray-drying apparatus. A typical technique is for a solution containing 40 parts by weight magnesium chloride per 100 parts by weight ethanol, maintained at about 130°C under a nitrogen pressure of about 5 bar, to be delivered to a spray-drying apparatus in a gaseous nitrogen countercurrent flow, the latter having an inlet temperature of the order of 350°C and an outlet temperature of the order of 230°C. Under these conditions a magnesium chloride support containing ethanol hydroxy is obtained, having the following general characteristics: spherical particles, at least 70 wt% of which have a diameter from 0.5 to 10 »m, an apparent density from 0.3 to 0.5 g/ml, a porosity from 0.6 to 0.8 ml/g, a surface area from 2 to 20 m²/g and a hydroxy alcohol content from 3 to 15 wt%, expressed as the weight of ethanol.
A support of this type is activated by interaction with titanium tetrachloride and typically 70-80 parts by weight of the support are suspended in 100 parts by weight titanium tetrachloride and the suspension heated to 80-100°C for a period of 15 to 60 minutes. After separation and washing with liquid paraffin of the solid which has been treated in this way, an activated support is obtained having a shape, dimensions and apparent density similar to those of the support and the following other characteristics: a porosity from 0.7 to 1 ml/g, a surface area from 10 to 100 m²/g, a hydroxy alcohol content from 0.2 to 4 wt%, expressed as weight of ethanol, and a titanium content from 0.02 to 4 wt%, expressed as metallic titanium.

The support,activated in this way, is then brought into contact with an aluminium alkyl chloride, selected from aluminium dialkyl chloride, aluminium alkyl dichloride and aluminium alkyl sesquichloride, having an atomic ratio between the aluminium (in the said aluminium alkyl chloride) and the titanium (in the said activated support) from 2/1 to 20/1, at a temperature from about 0 to about 100°C and for a period from about 100 hours to about 15 minutes. This treatment, which is preferably carried out in a liquid paraffin vehicle, enables the formation of the solid catalyst component having the characteristics specified above.

The cocatalyst, used in combination with the solid component described above is an aluminium trialkyl containing from 2 to 4 carbon atoms in the alkyl portion. The preferred cocatalyst is aluminium triethyl.

For preparation of the ethylene-propylene copolymers, a gas stream containing ethylene and propylene in a weight ratio from 15:85 to 72:25, and possibly hydrogen in a quantity from 0 to 2000 parts by volume per million parts by volume of the stream itself, is introduced, together with a stream of solid catalyst component and a cocatalyst stream, into a reactor vessel or tubular reactor, maintained at high temperature and pressure values and for relatively low residence times under polymerization conditions. In particular, the general operating conditions are as follows:
- reactor temperature: from 90 to 280°C (tubular reactor)
   from 140 to 280°C (reactor vessel)
   (with a gas inlet temperature of the order of 60°C)
- pressure: from 800 to 2000 bar
- residence time: from 15 to 60 s
- quantity of solid catalyst component: from 15 to 100 mg per kg monomers (ethylene and propylene)
- quantity of cocatalyst: from 0.2 to 1.0 mmoles per kg monomers (ethylene and propylene)
- atomic ratio between the aluminium (in the cocatalyst) and the titanium (in the solid from 15/1 to 70/1 and catalyst component): preferably from 15/1 to 45/1.

The solid catalyst component is conveniently fed in in the form of a suspension in an inert hydrocarbon vehicle and the cocatalyst in the form of a solution in a liquid hydrocarbon solvent.

The polymerization product is subjected at the reactor outlet to a multistage flash at progressively decreasing pressures to recover the copolymer and separate the unchanged monomers, which are recycled after purification and reintegration with fresh gases.

The ethylene-propylene copolymer recovered in this way has typically characteristics within the following value ranges:

| | |
|---|---|
| - propylene content: (IR determination) (ASTM D-2238-69) | from 10 to 30 wt% |
| - density: (ASTM D-2839) | from 0.880 to 0.915 g/ml |
| - melting index: (ASTM D-1238, cond. E, proc. A) | from 1 to 90 g/10′ |
| - shear sensitivity: (ASTM D-1238) | from 20 to 45 |
| - haze: (ASTM D-1003) | from 1.5 to 7.5% |
| - dart drop test (impact): (ASTM D-1709) | from 9 to 25 kJ/m |

| - elongation at rupture | |
|---|---|
| (ASTM D-882B) longitudinal: | from 350 to 700% |
| transverse: | from 700 to 800% |
| Vicat test: (ASTM D-1525) | from 60 to 90°C |
| - colour: | from A to B |
| - odour on the polymer and film surface: | none |

The colour values are determined by the modified ASTM D-1725 method, comparing the ethylene-propylene copolymer under examination with polyethylenes having a known colour and obtained by the standard method indicated above. The reference polyethylenes are assigned conventional colour values on a scale from A to D, where A represents the better colour.

It is therefore possible according to the invention to obtain ethylene-propylene copolymers with low density values (from 0.905 to 0.915 g/ml) to very low density values (from 0.880 to 0.905 g/ml) depending on the operating range. These copolymers are of particular use in film production, in particular film cast and materials for mixing with other polymers and with bitumen in the production bituminous casings for waterproofing of buildings and building sites. They have also found uses in the expanded foam sector and as blending products for modifying the rheological properties of LLDPE.

The experimental examples below have been given as a clearer illustration of the invention.

### Example 1

40 kg magnesium chloride with a water content of less than 0.7 wt% is dissolved in 100 kg anhydrous ethanol (with a water content below 0.2 wt%) at 130°C and under a nitrogen pressure of 5 bar. This solution is introduced, at the same temperature and at the same pressure, into a spray-drying apparatus of the "closed cycle drying" type from the firm NIRO, operating on an equiflow regime and with total recovery of the evaporated organic solvent. In this apparatus the solution is reduced to droplet form, operating at an inlet temperature of the nitrogen gas flow of 350°C and an outlet temperature of the nitrogen gas flow of 225-235°C. Under these conditions a solid granular material having the following characteristics is formed at the bottom of the spray-drier:
- particle shape and dimensions: spherical with about 90% particles having a diameter from 0.5 to 10 »m;
- hydroxy alcohol content: 10 wt%, expressed as weight of ethanol;
- apparent density: 0.4 g/ml;
- porosity: 0.7 ml/g; and
- surface area: 3 m²/g.

45 kg of the support obtained as described above are suspended in 60 kg titanium tetrachloride. The mixture is heated for 30 min at 100°C. At the end of this period it is cooled, the unchanged titanium tetrachloride is filtered off and the solid washed with n-decane until no further chlorine is present in the washing liquid. This yields an activated support having the following characteristics:
- shape and dimensions of the particles: similar to those of the support;
- hydroxy alcohol content: 2.5 wt%, expressed as weight of ethanol;
- titanium content: 2.3 wt%, expressed as metallic titanium;
- apparent density: similar to that of the support;
- porosity: similar to that of the support; and
- specific surface area: 18 m²/g.

45 kg of the activated support, obtained as described above, are suspended in 100 l isoparaffin C10-C12 (the commercial product ISOPAR G from the firm EXXON). The material is heated at 70°C and 18 kg aluminium diethyl chloride added gradually over the course of 1 hour, under constant stirring. On conclusion of the addition process, the material is maintained under constant stirring for a further hour at 70°C. This yields the solid catalyst component in the form of particles suspended in the liquid vehicle. The solid component in particle form has the following characteristics:
- shape and particle size: similar to those of the support;
- hydroxy alcohol content: 0.8 wt%, expressed as weight of ethanol;
- titanium content: 2.3 wt%, expressed as metallic titanium;
- ratio between titanium in the trivalent state and the total titanium in the trivalent and tetravalent states: 0.31/1;
- apparent density: similar to that of the support;
- porosity: 0.8 g/ml; and
- surface area: 26 m²/g.

### Example 2

Use is made for the polymerization test of a reactor vessel having a capacity of 0.5 l, fitted with a turbine stirrer, wave-breakers and a thermostatic control system. The following elements are fed in continuously at the top of the reactor vessel:
- an ethylene and propylene stream (in a weight rato of 64:36) at an overall flow rate of 30 kg/h,
- an aluminium triethyl solution in hexane (concentration: 6-7 mM/l), containing about 0.3 mM aluminium triethyl per kg total gas (ethylene and propylene), and
- a vaseline suspension (supplied by Carlo Erba) of the solid catalyst component prepared in Example 1, in an amount (dry weight) of 18.6 mg per kg total gas (ethylene and propylene).

The operations are carried out at a reagent inlet temperature of 60°C, a polymerization temperature of 220°C, a stirring speed of 1700 revolutions/s and a residence time of about 30 s. The polymerization product is continuously discharged at the bottom of the reactor and subjected to a first flash in a high pressure separator (280 bar), followed by a second flash in a low pressure separator (1-1.5 bar). Diethylene glycol is injected at the site of discharge from the reactor, to deactivate the catalyst. Unreacted monomers, after separation of the flash treatment, are recycled after purification and reintegration with fresh monomers. The polymer is recovered by means of an extruder connected to the low pressure separator.

The process is operated under these conditions for 48 h with the following results:
- monomer conversion: 11.0 wt%;
- mean hourly output of ethylene-propylene copolymer: 3.3 kg;
- propylene (C3) content in the copolymer: 13 wt%;
- melting index (MFI) of the copolymer: 22 g/10′;
- density of the copolymer: 0.910 g/ml;
- copolymer yield in g per g titanium (g/gTi): 256,000.
The polymerization conditions are set out in Table I and the polymerization results in Table II.

### Examples 3-6

The procedure is similar to that described in Example 2, with variation of one or more of the reaction parameters, as shown in Table I. The polymerization results are shown in Table II.

**Table I**

| Example No. | Inlet temperature °C | Polymerization temperature °C | Gas delivery (C2+C3 ; kg) | Weight ratio (C2/C3) |
|---|---|---|---|---|
| 2 | 60 | 220 | 30 | 64/36 |
| 3 | 60 | 236 | 30 | 63/37 |
| 4 | 60 | 247 | 30 | 62/38 |
| 5 | 60 | 238 | 30 | 70/30 |
| 6 | 60 | 254 | 30 | 69/31 |

**Table II**

| Example No. | Conversion (%) | Output (kg) | C3 bound (wt%) | MFI (g/10′) | Density (g/ml) | Yield (g/gTi) |
|---|---|---|---|---|---|---|
| 2 | 11.0 | 3.3 | 13 | 22 | 0.910 | 256,000 |
| 3 | 13.3 | 4.0 | 14 | 32 | 0.908 | 153,000 |
| 4 | 14.9 | 4.5 | 15 | 42 | 0.905 | 95,000 |
| 5 | 13.6 | 4.1 | 19 | 55 | 0.895 | 153,000 |
| 6 | 15.8 | 4.8 | 21 | 90 | 0.892 | 88,000 |

### Example 7

Use is made of a steel tubular reactor of an industrial type having an internal diameter of 1 inch (25.4 mm) and a length of 600 m. Ethylene, propylene, hydrogen and 20 l/h of a suspension containing 30 g/l solid catalyst component, prepared as in Example 1, in a mixture of C10-C12 isoparaffin (ISOPAR G) are fed in at one end of the reactor. 8-12 l/h 13 wt% aluminium triethyl solution in heptane are fed in a few metres upstream from the site of introduction of the suspension. This ensures that the atomic ratio between the aluminium, in the said aluminium triethyl, and the titanium in the solid catalyst component is about 30-40/l.

Polymerization is carried out under the following conditions:

| | |
|---|---|
| - C2+C3 feed to the reactor: | 11,900 kg/h |
| - C2/C3 weight ratio in the feed: | 35/65 |
| - hydrogen supply (based on total gas): | 1800 vpm* |
| - pressure at the reactor inlet: | 1260 bar |
| - temperature at the reactor inlet: | 60°C |
| - polymerization priming temperature: | 100°C |
| - peak temperature: | 265°C |
| - residence time: | 42-44 s |

| | |
|---|---|
| (* = parts by volume per million per parts by volume) | |

A polyhydroxylated compound is introduced at the reactor outlet in order to deactivate the catalyst and the polymer is recovered via a multistage flash with direct feed to the extruder. The recovered gases are recycled to the reactor inlet after purification and reintegration with fresh gases.

Under the operating conditions specified above, the conversion rate, based on ethylene, is about 60% and the output about 2.9 t/h ethylene propylene (mean catalytic yield: 210,000 g copolymer per g titanium), with a propylene content of 15 wt%, having the following characteristics:

| | |
|---|---|
| - density: | 0.905 g/ml |
| - melting index: | 30 g/10′ |
| - colour: | A/B |
| - odour (on the polymer): | none |

### Example 8

The procedure is similar to that described in Example 7 with the following differences:

| | |
|---|---|
| - C2+C3 feed to the reactor: | 12,200 kg/h |
| - C2/C3 weight ratio in the feed: | 28/72 |
| - hydrogen supply (based on total gas): | 1,100 vpm |
| - pressure at the reactor inlet: | 1,280 bar |
| - polymerization priming temperature: | 95°C |
| - peak temperature: | 248°C |

Under these conditions the conversion rate, based on ethylene, is about 70% and the output about 3.0 t/h ethylene-propylene copolymer (mean catalytic yield: 165,000 g copolymer per g titanium) with a propylene of 20 wt% having the following characteristics:

| | |
|---|---|
| - density: | 0.895 g/ml |
| - melting index: | 30 g/10′ |
| - colour: | A/B |
| - odour (on the polymer): | none |

### Example 9

The procedure is similar to that described in Example 7 with the following differences:

| | |
|---|---|
| - C2+C3 feed to the reactor: | 12,500 kg/h |
| - C2/C3 weight reactor in the feed: | 22/78 |
| - hydrogen supply: | none |
| - pressure at the reactor inlet: | 1,280 bar |
| - polymerization priming temperature: | 88°C |
| - peak temperature: | 250°C |

Under these conditions the conversion rate, based on ethylene, is about 68% and the output about 2.5 t/h ethylene-propylene copolymer (mean catalytic yield: 170,000 g copolymer per g titanium) with a propylene content of 25 wt%, having the following characteristics:

| | |
|---|---|
| - density: | 0.880 g/ml |
| - melting index: | 7.0 g/10′ |
| - colour: | A/B |
| - odour (on the polymer): | none |

### Example 10

The procedure is similar to that described in Example 7, with the following differences:

| | |
|---|---|
| - C2+C3 feed to the reactor: | 12,500 kg/h |
| - C2/C3 weight ratio in the feed: | 22/78 |
| - hydrogen supply (based on total gas): | 800 vpm |
| - pressure at the reactor inlet: | 1,250 bar |
| - polymerization priming temperature: | 96°C |
| - peak temperature: | 255°C |

Under these conditions the conversion rate, based on ethylene, is about 73% and the output about 2.8 t/h ethylene-propylene copolymer (mean catalytic yield: 165,000 g copolymer per g titanium) with a propylene content of 28 wt%, having the following characteristics:

| | |
|---|---|
| - density: | 0.880 g/ml |
| - melting index: | 30g/10′ |
| - colour: | A/B |
| - odour (on the polymer): | none |

### Example 11

The procedure is similar to that described in Example 7, with the following differences:

| | |
|---|---|
| - C2+C3 feed to the reactor: | 11,500 kg/h |
| - C2/C3 weight ratio in the feed: | 44/56 |
| - hydrogen supply: | none |
| - priming temperature: | 95°C |
| - peak temperature: | 240°C |

Under these conditions the conversion rate, based on ethylene, is about 35% and the output about 2.0 t/h ethylene-propylene copolymer (mean catalytic yield: 280,000 g copolymer per g titanium), with a propylene content of 11 wt%, having the following characteristics:

| | |
|---|---|
| - density: | 0.9157 g/ml |
| - melting index: | 1.07 g/10′ |
| - shear sensitivity: | 37 |
| - dart drop test (impact): | 9.5 kJ/m |
| - haze: | 7.1% |

| - elongation at rupture | |
|---|---|
| longitudinal: | 560% |
| transverse: | 880% |
| - Vicat: | 85°C |
| - colour: | A/B |
| - odour (on the polymer): | none |
| - no odour in the filming phase. | |

### Example 12

The procedure is similar to that described in Example 7, with the following differences:

| | |
|---|---|
| - C2+C3 feed to the reactor: | 11,500 kg/h |
| - C2/C3 weight ratio in the feed: | 45/55 |
| - hydrogen supply: | none |
| - priming temperature: | 105°C |
| - peak temperature: | 255°C |

Under these conditions the conversion rate, based on ethylene, is about 39-40% and the output about 2.25 t/h ethylene-propylene copolymer (mean catalytic yield: 225,000 g copolymer per g titanium), with a propylene content of 13 wt%, having the following characteristics:

| | |
|---|---|
| - density: | 0.910 g/ml |
| - melting index: | 2.27 g/10′ |
| - shear sensitivity: | 40 |
| - dart drop test (impact): | 9.6 kJ/m |
| - haze: | 2% |

| - elongation at rupture | |
|---|---|
| longitudinal: | 450% |
| transverse: | 810% |
| - Vicat: | 71°C |
| - colour: | A/B |
| - odour (on the polymer): | none |
| - no odour in the filming phase. | |

## Claims

1. Process for the preparation of 1-butene free ethylene-propylene copolymers having a density from 0.880 to 0.915 g/ml and a content of propylene from 10 to 30% by weight, by copolymerization of the ethylene and propylene at a pressure of from 800 to 2000 bar, in a reactor vessel at a temperature of from 90 to 280°C, or in a tubular reactor at a temperature of from 140 to 280°C, in the presence of Ziegler catalyst consisting of:
(a) an aluminium trialkyl cocatalyst, and
(b) a solid titanium catalyst component supported on magnesium chloride, the said component being formed of spherical particles at least 70% of which have a diameter from 0.5 to 10 » m, an apparent density from 0.3 to 0.5 g/ml, a porosity from 0.6 to 1.2 ml/g, a surface area from 20 to 120 m²/g, a hydroxy alcohol content below 2 wt% expressed as weight of ethanol, and a titanium content from 0.4 to 4.0 wt%, expressed as metallic titanium, the said titanium being present partially in the trivalent and partially in the tetravalent state, with a ratio between the said titanium in the trivalent state and the total titanium from 0.2/l to 0.5/l, the atomic ratio between the aluminum in the cocatalyst (a) and the titanium in solid component (b) ranging from 15/1 to 70/1;
characterized in that:
said reactor vessel or tubular reactor is supplied with a gas mixture containing ethylene and propylene in a weight ratio between 15:85 and 75:25, and possibly hydrogen in a quantity from 0 to 2000 parts by volume per million parts by volume of the gas mixture.

2. Process according to Claim 1, characterized in that the cocatalyst is an aluminium trialkyl containing 2 to 4 carbon atoms in the alkyl portion and is preferably aluminium triethyl.

3. Process according to Claim 1, characterized in that the solid catalyst component contains 2 to 3 wt% titanium and less than 1 wt% ethanol.

4. Process according to Claim 1, characterized in that it is carried out with a residence time from 15 to 60 s, using a quantity of solid catalyst component from 15 to 100 mg per kg monomers (ethylene and propylene), a quantity of cocatalyst from 0.2 to 1.0 mmoles per kg of the said monomers.

## Patentansprüche

1. Verfahren zur Herstellung eines 1-Buten freien Ethylen-Propylen-Copolymers mit einer Dichte von 0,880 bis 0,915 g/ml und einem Gehalt an Propylen von 10 bis 30 Gew.-% durch Copolymerisation von Ethylen und Propylen bei einem Druck von 800 bis 2000 bar, in einem Reaktionsgefäß bei einer Temperatur von 90 bis 280°C oder in einem Röhrenreaktor bei einer Temperatur von 140 bis 280°C, in Gegenwart eines Ziegler-Katalysators bestehend aus:
(a) einem Aluminiumtrialkyl-Cokatalysator und
(b) einer festen Titankatalysatorkomponente auf einem Magnesiumchloridträger, wobei die Komponente aus kugelförmigen Teilchen gebildet wird, von denen wenigstens 70 Gew.-% ein Durchmesser von 0,5 bis 10 »m, eine scheinbare Dichte von 0,3 bis 0,5 g/ml, eine Porosität von 0,6 bis 1,2 ml/g, eine Oberfläche von 20 bis 120 m²/g, einen Hydroxyalkoholgehalt unter 2 Gew.-%, ausgedrückt als Gewicht von Ethanol und ein Titangehalt von 0,4 bis 4,0 Gew.-%, ausgedrückt als metallisches Titan, haben, wobei das Titan zum Teil im dreiwertigen und zum Teil im vierwertigen Zustand vorliegt, und das Verhältnis des Titans in dreiwertigen Zustand zu dem Gesamttitan 0,2/1 bis 0,5/1 beträgt, das Atomverhältis zwischen den Aluminium in dem Cokatalysator (a) und dem Titan in der Festkomponente (b) 15/1 bis 70/1 beträgt,
dadurch **gekennzeichnet**, daß in das Reaktorgefäß oder in den Röhrenreaktor eine Gasmischung eingeleitet wird, enthaltend Ethylen und Propylen in einem Gewichtsverhältnis zwischen 15:85 und 75:25, und gegebenenfalls Wasserstoff in einer Menge von 0 bis 2000 Vol.-Teilen pro Million Vol.-Teile der Gasmischung.

2. Verfahren gemäß Anspruch 1, dadurch **gekennzeichnet**, daß der Cokatalysator ein Aluminiumtrialkyl ist, enthaltend 2 bis 4 Kohlenstoffatome in Alkylteil und vorzugsweise Aluminiumtriethyl ist.

3. Verfahren gemäß Anspruch 1, dadurch **gekennzeichnet,** daß die feste Katalysatorkomponente 2 bis 3 Gew.-% Titan und weniger als 1 Gew.-% Ethanol enthält.

4. Verfahren gemäß Anspruch 1, dadurch **gekennzeichnet**, daß es mit einer Verweilzeit von 15 bis 60 Sekunden durchgeführt wird unter Verwendung einer Menge der festen Katalysatorkomponente von 15 bis 100 mg pro kg Monomeres (Ethylen und Propylen) und einer Menge des Cokatalysators von 0,2 bis 1,0 mmol pro kg der Monomeren.

## Revendications

1. Procédé pour la préparation de copolymères poly (éthylène/propylène) exempts de 1-butène ayant une masse volumique de 0,880 à 0,915 g/ml et une teneur en propylène allant de 10 à 30% en poids, par copolymérisation de l'éthylène et dupropylène à une pression de 800 à 2000 bars, dans une cuve de réacteur à une température allant de 90 à 280°C, ou dans un réacteur tubulaire à une température allant de 140 à 280°C, en présence de catalyseur Ziegler consistant en:
(a) un cocatalyseur de type trialkyl-aluminium et
(b) un composé catalytique solide de titane fixé sur chlorure de magnésium, ledit composé étant formé de particules sphériques dont au moins 70% ont un diamètre allant de 0,5 à 10 »m, une masse volumique apparente allant de 0,3 à 0,5 g/l, une porosité allant de 0,6 à 1,2 ml/g, une surface spécifique allant de 20 à 120 m²/g, une teneur en alcool hydroxylique inférieure à 2% en poids, exprimée en poids d'éthanol, et une teneur en titane, sous forme de titane métallique, allant de 0,4 à 4,0 % en poids, ledit titane étant présent en partie à l'état trivalent et en partie à l'état tétravalent, avec un rapport entre ledit titane à l'état trivalent et le titane total allant de 0,2/1 à 0,5/1; le rapport atomique d'aluminium entre le cocatalyseur (a) et le titane dans le composé solide (b) étant compris entre 15/1 et 70/1;
caractérisé en ce que:
ladite cuve de réacteur ou réacteur tubulaire est alimenté avec un mélange de gaz contenant l'éthylène et le propylène dans un rapport en poids compris entre 15:85 et 75:25, et éventuellement de l'hydrogène en une quantité allant de 0 à 2000 parties en volume par million de parties en volume du mélange de gaz.

2. Procédé conforme à la revendication 1, caractérisé en ce que le cocatalyseur est un trialkyl-aluminium contenant 2 à 4 atomes de carbone dans la partie alkyle et est de préférence un triéthyl-aluminium.

3. Procédé conforme à la revendication 1, caractérisé en ce que le composant catalytique solide contient 2 à 3% en poids de titane et moins de 1% en poids d'éthanol.

4. Procédé conforme à la revendication 1, caractérisé en ce qu'il est effectué avec un temps de séjour allant de 15 à 60 s, utilisant une quantité de de composant catalytique solide allant de 15 à 100 mg par kg de monomères (éthylène et propylène) et une quantité de cocatalyseur allant de 0,2 à 1,0 mmole par kg desdits monomères.
